(19) Europäisches Patentamt
European Patent Office
Office européen des brevets

(11) EP 1 165 577 B1

(12) FASCICULE DE BREVET EUROPEEN

(45) Date de publication et mention de la délivrance du brevet: **16.06.2004 Bulletin 2004/25**

(21) Numéro de dépôt: **00910962.0**

(22) Date de dépôt: **16.03.2000**

(51) Int Cl.[7]: **C07F 15/04**, C07F 9/535, B01J 31/18, C08F 4/26, C08F 4/80, C08F 10/00

(86) Numéro de dépôt international: **PCT/FR2000/000639**

(87) Numéro de publication internationale: **WO 2000/056744 (28.09.2000 Gazette 2000/39)**

(54) **PROCEDE DE POLYMERISATION DES OLEFINES EN PRESENCE DE COMPLEXES DU NICKEL ET SYSTEME CATALYTIQUE CORRESPONDANT**

VERFAHREN ZUR OLEFINPOLYMERISATION IN GEGENWART VON NICKEL-KOMPLEXEN UND ENTSPRECHENDES KATALYTISCHES SYSTEM

METHOD FOR POLYMERISING OLEFINS IN THE PRESENCE OF NICKEL COMPLEXES AND CORRESPONDING CATALYTIC SYSTEM

(84) Etats contractants désignés: **AT BE CH CY DE DK ES FI FR GB GR IE IT LI LU MC NL PT SE**

(30) Priorité: **19.03.1999 FR 9903463**

(43) Date de publication de la demande: **02.01.2002 Bulletin 2002/01**

(73) Titulaire: **Atofina**
**92800 Puteaux (FR)**

(72) Inventeurs:
- **TOMOV, Atanas**
  **Croydon CR0 3RH (GB)**
- **SPITZ, Roger**
  **F-69006 Lyon (FR)**
- **SAUDEMONT, Thierry**
  **F-64110 Jurancon (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**WO-A-97/17380**
**BG-A- 51 624**
**BG-A- 60 319**

- **KURTEV, K. ET AL: "Ethene polymerization by binuclear nickel -ylide complexes" J. MOL. CATAL. (1994), 88(2), 141-50, XP000853888**
- **KEIM, WILHELM ET AL: "Reactions of chelate ylides with nickel (0) complexes" ORGANOMETALLICS (1986), 5(11), 2356-9, XP000856037**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne la polymérisation des oléfines en présence d'un complexe bimétallique du nickel formé *in situ*.

Les polymères de l'éthylène et autres oléfines ont un attrait commercial important. Les applications de ces polymères sont extrêmement nombreuses, allant des produits de bas poids moléculaires pour les lubrifiants et les graisses, aux produits de plus hauts poids moléculaires pour la fabrication de fibres, de films, d'objets moulés, d'élastomères, etc. Dans la plupart des cas, les polymères sont obtenus par polymérisation catalytique des oléfines au moyen d'un composé à base d'un métal de transition. La nature de ce composé a une très forte influence sur les propriétés du polymère, son coût, sa pureté. Etant donné l'importance des polyoléfines, il y a un besoin permanent d'améliorer les systèmes catalytiques et d'en proposer de nouveaux.

. Il existe une variété de catalyseurs homogènes ou hétérogènes de polymérisation ou de copolymérisation de l'éthylène. Parmi les familles les plus connues, on peut citer par exemple les catalyseurs de type "Ziegler" faisant intervenir des complexes organométalliques des métaux des groupes III et IV ou les catalyseurs de type "Philipps" faisant intervenir des complexes du chrome. Mais il existe également des catalyseurs à base de nickel utilisés en particulier depuis de nombreuses années pour la production d'$\alpha$-oléfines. Certains systèmes possèdent en plus une certaine tolérance envers les milieux polaires.

Parmi les nombreux systèmes catalytiques exposés dans la littérature, il a été décrit par exemple l'association entre un complexe de nickel, tel que le bis-1,5-cyclooctadiène, avec des dérivés de l'acide benzoïque comme l'acide 2-mercaptobenzoïque ou l'acide 3,5-diaminobenzoïque (US-A-3 637 636) ou avec des ligands organophosphorés tertiaires chélatants (US-A-3 635 937, US-A-3 647 914) ou encore avec les acides glycoliques, thioglycoliques ou thiolactiques (US-A-3 661 803). Dans US-A-3 686 159 est décrite l'utilisation d'un complexe de nickel au degré zéro, comme de nouveau le 5 bis-1,5-cyclooctadiène, avec un ligand ylide phosphoré. Les inventions ci-dessus ont en commun la formation *in situ* dans le milieu de polymérisation de l'espèce active.

D'autres méthodes, comme dans le brevet américain US-A-4 716 205 ou le brevet bulgare BG 60319 ou dans J. Mol. Catal. (1994), 88(2), 141-50 ou dans J. Mol. Catal. (1995), 103, 95-103, revendiquent des systèmes catalytiques du nickel qui peuvent être isolés, mais il est nécessaire d'introduire dans le milieu de polymérisation un composé accepteur capable d'extraire un des ligands du complexe du nickel pour le rendre actif. La technique *in situ* ne permet pas d'isoler le système catalytique de manière à identifier précisément sa structure mais la démarche a le mérite d'être simple et elle limite les manipulations des catalyseurs, qui est source de pollution.

La présente invention se rapporte à l'utilisation de nouveaux ligands qui, utilisés in situ avec un complexe de nickel au degré zéro en présence d'au moins une oléfine, comme l'éthylène ou un mélange d'éthylène avec une ou plusieurs autres oléfines, permettent d'obtenir une polyoléfine comme le polyéthylène ou un copolymère de l'éthylène, de haute masse, avec une très forte activité même en présence d'un milieu polaire.

La présente invention a donc d'abord pour objet un procédé de polymérisation d'au moins une oléfine dans un milieu diluant en présence d'un complexe bimétallique du nickel formé in situ à partir:

(A) au moins un ligand pouvant être représenté par la formule générale (I) :

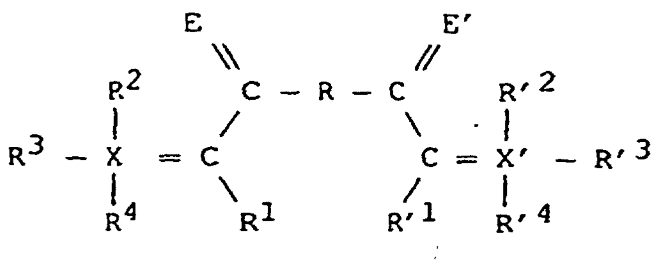

(I)

dans laquelle :

- E et E' représentent chacun indépendamment un atome d'oxygène ou de soufre ;
- X et X' représentent chacun indépendamment un atome de phosphore, d'arsenic ou d'antimoine ;
- les radicaux $R^1$ et $R'^1$, pouvant être identiques ou différents, sont choisis parmi :
  - . l'hydrogène ;
  - . les radicaux alkyle, linéaires, ramifiés ou cycliques ;
  - . les radicaux aryle ;

- . les radicaux arylalkyle ;
- . les radicaux alkylaryle ;
- . les halogènes ;
- . le radical hydroxyle ;
- . les radicaux alkoxyde ;
- . 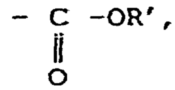

  où R' représente un radical hydrocarboné pouvant comprendre de 1 à 15 atomes de carbone ;
- . $-SO_3Y$, où Y est choisi parmi Li, Na, $NH_4^+$, $NR_4''^+$ (où R" représente un radical hydrocarboné pouvant comprendre de 1 à 15 atomes de carbone) ;

- les radicaux $R^2$, $R'^2$, $R^3$, $R'^3$, $R^4$ et $R'^4$, pouvant être identiques ou différents, sont choisis parmi les radicaux alkyle, linéaires, ramifiés ou cycliques, et les radicaux arylalkyle ; et
- R est un radical bivalent tel que défini ci-après ; et

(B) au moins un composé du nickel choisi parmi :

(B1) les complexes de nickel de degré d'oxydation zéro, pouvant être représentés par la formule générale (II) :

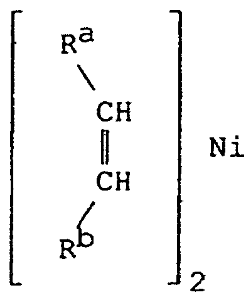 (II)

dans laquelle $R^a$ et $R^b$ représentent chacun indépendamment un atome d'hydrogène, ou un radical alkyle, linéaires, ramifiés ou cycliques, aryle, arylalkyle ou alkylaryle, pouvant posséder jusqu'à 8 atomes de carbone, $R^a$ et $R^b$ pouvant former ensemble un groupement aliphatique divalent de 2 à 10 atomes de carbone et pouvant posséder jusqu'à trois doubles liaisons oléfiniques comme seules insaturations carbone-carbone ;

(B2) les nickels n-allyles, pouvant être représentés par la formule générale (III) :

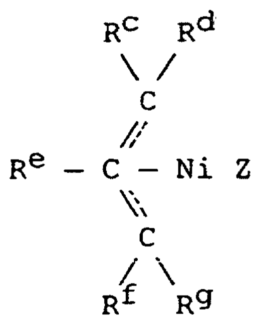 (III)

dans laquelle :

- les radicaux $R^c$, $R^d$, $R^e$, $R^f$, $R^g$ pouvant être identiques ou différents, sont choisis parmi l'hydrogène et les radicaux alkyle, linéaires, ramifiés ou cycliques, aryle, arylalkyle ou alkylaryle, ayant jusqu'à 8 atomes de carbone ;

- les lignes en pointillés représentent la délocalisation électronique sur les trois atomes de carbone contigus ;
- un radical $R^c$ ou $R^d$ pouvant former avec un radical $R^e$ ou $R^f$ ou $R^g$ un groupe alcène divalent ayant de 2 à 10 atomes de carbone, de préférence de 2 à 5 atomes de carbone, et pouvant posséder jusqu'à trois doubles liaisons oléfiniques ; et
- Z représente un halogène, de préférence un atome de chlore ou de brome, un alcoxy ou un alcanoyloxyle, ces derniers pouvant notamment posséder de 1 à 10 atomes de carbone ;

(B3) les composés de type bis-allyle nickel pouvant être représentés par la formule générale (IV) :

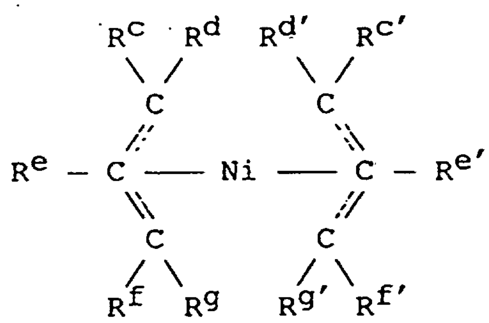

(IV)

dans laquelle :

- les radicaux $R^e$ à $R^g$, et $R^{e'}$ à $R^{g'}$, pouvant être identiques ou différents, sont choisis parmi l'hydrogène et les radicaux alkyle, linéaires, ramifiés ou cycliques, aryle, arylalkyle ou alkylaryle ayant jusqu'à 8 atomes de carbone ;
- les lignes en pointillés représentent la délocalisation électronique sur les trois atomes de carbone contigus ;
- un radical $R^c$ ou $R^d$ pouvant former avec un radical $R^e$ ou $R^f$ ou $R^9$ un groupe alcène divalent ayant de 2 à 10 atomes de carbone, de préférence de 2 à 5 atomes de carbone, et pouvant posséder jusqu'à trois doubles liaisons oléfiniques ;
- un radical $R^{c'}$ ou $R^{d'}$ pouvant former avec un radical $R^{e'}$ ou $R^{f'}$ ou $R^{g'}$ un groupe alcène divalent ayant de 2 à 10 atomes de carbone, de préférence de 2 à 5 atomes de carbone, et pouvant posséder jusqu'à trois doubles liaisons oléfiniques.

Dans la formule (I), de préférence, E et E'sont séparés par des atomes intermédiaires liés entre eux par des liaisons covalentes ou de coordination ; de préférence encore, le nombre minimal d'atomes entre E et E' dans la formule (I) est de 3 à 40. Par nombre minimal d'atomes entre E et E', on entend le nombre minimal d'atomes que l'on rencontre dans la molécule lorsque l'on passe de l'atome E à l'atome E' en suivant les liaisons atome par atome. A titre d'exemple, si le ligand comprend la structure :

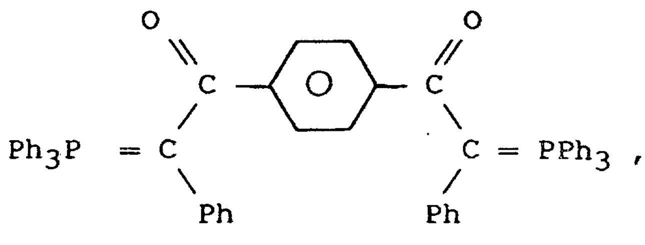

dans laquelle Ph représente un radical phényle, le nombre minimal d'atomes entre les atomes d'oxygène est de 6, car il n'est pas possible de rencontrer moins de 6 atomes lorsque l'on passe du premier au second oxygène.

Par ailleurs, dans la formule (I), R est choisi parmi :

les radicaux hydrocarbonés bivalents comprenant, par exemple, de 2 à 38 atomes de carbone, comme les radicaux alkylène, alcénylène, arylène, cycloalkylène, bicycloalkylène, alkylarylène ; et

le radical 1,1'-ferrocènylène éventuellement substitué, par exemple par un ou deux radicaux monovalents comme

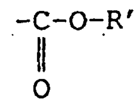

ou $-SO_3Y$, R' et Y ayant les significations déjà données.

A titre d'exemples, le ligand de formule (I) peut être l'un de ceux comprenant les structures suivantes :

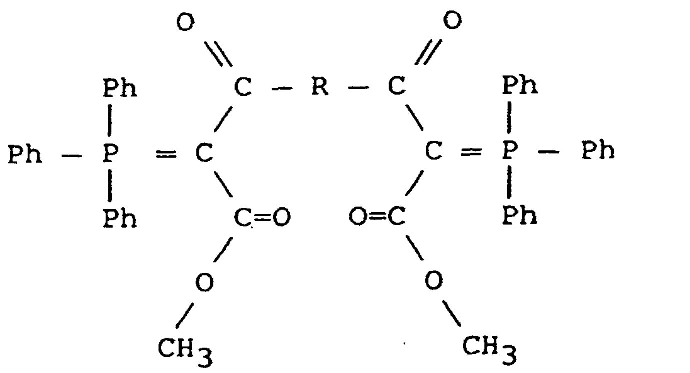

(Ia)

où R représente un radical 5,6-bicyclo[2.2.1]heptène-2; $-(CH_2)_4-$ ou $-(CH_2)_8-$;

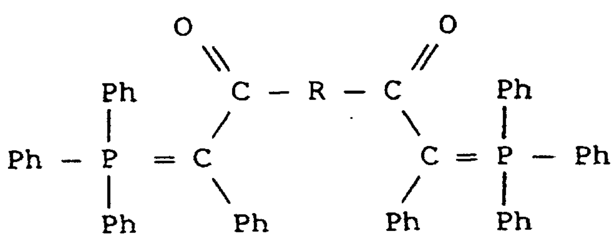

(Ib)

où R représente un radical 5,6-bicyclo[2.2.1]-heptène-2 ; ou $-(CH_2)_8-$ ;

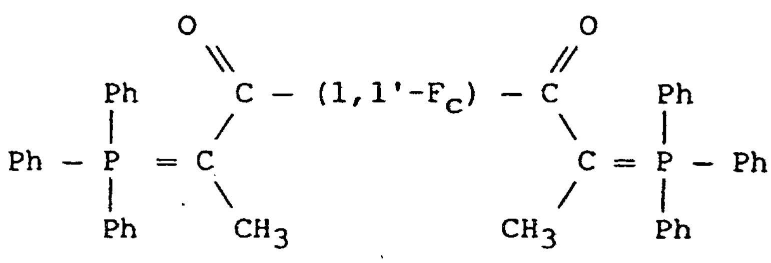

(Ic)

où 1,1'-$F_c$ représente un radical-1,1'-ferrocènylène ; et

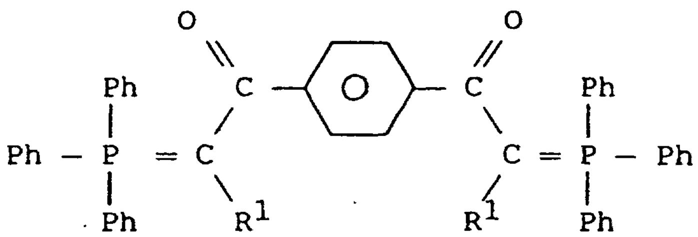

(Id)

où les $R^1$ représentent H ou Ph ou $SO_3Na$ ou

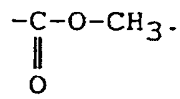

Le radical 5,6-bicyclo[2.2.1]heptène-2 peut être représenté par :

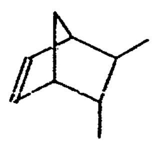

A titre d'exemples de composés du nickel ($B_1$), première famille citée de composés de nickel oléfiniques utilisables comme précurseurs catalytiques, on peut citer :

. le bis(1,5-cyclooctadiène)nickel (O) ;
. le bis(cyclooctatétraène)nickel(O) ; et
. le bis(1,3,7-octatriène)nickel (0).

Les nickel n-allyles (B2) sont une autre famille de composés de nickel oléfiniques utilisables comme précurseurs catalytiques. Dans ces composés, l'entité nickel est liée à un groupe n-allyle caractérisé par la délocalisation de la contribution électronique du groupe n-allyle sur trois atomes de carbone contigus.

Dans les composés de nickel (B2), ainsi que dans les composés de type bis-allyle nickel (B3) - constituant la troisième famille des composés de nickel oléfiniques utilisables comme précurseurs catalytiques, un groupement n-allyle possède généralement de 3 à 12 atomes de carbone ne possédant pas d'autres insaturations aliphatiques, sauf s'il contient un cycle fermé.

A titre d'exemples de composés du nickel (B2), on peut citer :

. le chlorure de n-allyl nickel ;
. le bromure de n-allyl nickel ;
. le chlorure de n-crotyl nickel ;
. le chlorure de n-méthylallyl nickel ;
. le chlorure de n-éthylallyl nickel ;
. le bromure de n-cyclopentylallyl nickel ;
. le chlorure de n-cyclooctényl nickel ;
. le chlorure de n-cyclooctadiényl nickel ;
. le bromure de n-cynnamyl nickel ;
. le chlorure de n-phénylallyl nickel ;
. le bromure de n-cyclohexényl nickel ;
. le chlorure de n-cyclododécényl nickel ;
. le chlorure de n-cyclododécatriényl nickel ;
. l'acétate de n-allyl nickel ;
. le propionate de n-méthylallyl nickel

- l'octoate de n-cyclooctényl nickel ;
- le méthoxylate de n-cyclooctényl nickel ; et
- l'éthoxylate de n-allyl nickel.

Bien que les halogénures (B2) ci-dessus existent probablement indépendamment sous la forme de dimères, pour la clarté de la présente description, ils sont cités sous la forme d'espèces monomériques.
A titre d'exemples de composés du nickel (B3), on peut citer :

- le nickel bis-n-allylique ;
- le nickel bis-n-méthallylique ;
- le nickel bis-n-cynnamyle ;
- le nickel bis-n-octadiényle ;
- le nickel bis-n-cyclohexényle ;
- le nickel n-allyl-n-méthallylique ; et
- le nickel bis-n-cyclooctatriényle.

De préférence, les composants (A) et (B) sont introduits dans des quantités telles que le rapport molaire nickel sur ligand(s) est compris entre 1 et 100, de façon davantage préférée, entre 2 et 50.
Conformément à un mode de réalisation particulièrement préféré du procédé selon l'invention,

- dans une première étape, on introduit dans un réacteur, séparément ou simultanément, chacun des constituants (A) et (B) se trouvant en solution dans un solvant inerte, ainsi que le milieu réactionnel ; et
- dans une seconde étape, on introduit le ou les oléfines, la (co) polymérisation ayant lieu à une température comprise entre 0 et 300°C, de préférence entre 25 et 250°C, et à une pression totale absolue allant de 1 à 200 bars, de préférence de 1 à 100 bars.

Comme indiqué ci-dessus, on introduit les constituants (A) et (B) dans un rapport molaire nickel sur ligand (s) de préférence compris entre 1 et 100, de façon davantage préférée entre 2 et 50.
Le solvant inerte dans lequel se trouvent les constituants (A) et (B) pour la première étape est un solvant compatible avec les opérations à mener. A titre d'exemples de tels solvants, on peut citer tous ceux compatibles avec la polymérisation des oléfines par une catalyse organométallique, en particulier les hydrocarbures aliphatiques saturés, alicycliques saturés, aromatiques, comme l'isobutane, le butane, le pentane, l'hexane, l'heptane, l'isododécane, le cyclohexane, le cycloheptane, le méthylcyclohexane, le méthylcycloheptane, le toluène, l'orthoxylène, le paraxylène et tout mélange des composés ci-dessus.
Les solvants inertes de chacun des constituants (A) et (B) peuvent être identiques ou différents.
Le milieu réactionnel du procédé selon l'invention peut être constitué par un milieu organique, ou bien il peut comprendre une phase aqueuse liquide continue, laquelle comprend plus de 30% en poids d'eau. Dans ce dernier cas, la phase aqueuse peut être la seule phase liquide du milieu réactionnel (excepté les solutions des constituants (A) et (B)). Egalement dans ce cas, le milieu peut comprendre une phase organique liquide.
La concentration du constituant (A) dans le solvant inerte est comprise de préférence entre 0,1 micromole et 100 millimoles par litre de solution ; et la concentration du constituant (B) dans le solvant inerte est comprise de préférence entre 0,1 micromole et 200 millimoles par litre de solution.
Le procédé selon l'invention est, d'une manière générale réalisé sous atmosphère inerte.
Dans une étape préliminaire, on peut mettre en contact les constituants (A) et (B) en solution dans leur solvant inerte, pendant une durée de 30 secondes à 15 minutes, de préférence de 30 secondes à 10 minutes, avant leur introduction dans le milieu réactionnel, cette étape de précontact étant réalisée également sous atmosphère inerte, à une température comprise entre 0 et 100°C, en particulier entre 10 et 70°C.
Les constituants (A) et (B) qui se trouvent en solution dans leur solvant inerte, peuvent également être introduits de façon séparée sans ordre préférentiel dans le milieu réactionnel, celui-ci étant maintenu à une température de 0 à 100°C, en particulier de 10 à 70°C.
On peut choisir le milieu de polymérisation (milieu organique) ou la phase organique d'un milieu de polymérisation comprenant une phase aqueuse liquide parmi :

- les hydrocarbures aliphatiques saturés, les hydrocarbures alicycliques saturés, les hydrocarbures aromatiques et leurs mélanges, en particulier parmi l'isobutane, le butane, le pentane, l'hexane, l'heptane, l'isododécane, le cyclohexane, le cycloheptane, le méthylcyclohexane, le méthylcycloheptane, le toluène, l'orthoxylène, le paraxylène et tout mélange de ces composés ; et
- dans la mesure où les conditions de polymérisation les conservent sous forme liquide, les $\alpha$-oléfines, telles que

le propylène, le butène, l'hexène ou le 4-méthyl pentène-1, les diènes non conjugués, tels que le 1,9-décadiène, le 1,5-hexadiène, le 1, 13-tétradécadiène, le biscyclo(2,2,1)-hepta-2,5-diène, et leurs mélanges.

Ce milieu organique pourrait également être choisi parmi les alcools, étant par exemple un monoalcool ou un diol, comprenant par exemple 5 à 20 atomes de carbone ; les éthers comprenant par exemple 3 à 15 atomes de carbone, comme par exemple le tétrahydrofuranne ou le dioxanne ; et les esters comprenant par exemple de 2 à 15 atomes de carbone, comme par exemple l'acétate d'éthyle ou de butyle ou de vinyle, ou l'acrylate de méthyle.

Dans le cas où le milieu de polymérisation comprend une phase aqueuse, au cours de la polymérisation, le milieu de polymérisation comprend ladite phase aqueuse liquide, une phase solide constituée par le polymère solide issu de la polymérisation, et comprend également, suivant l'état physique de l'oléfine à polymériser, au moins une autre phase gazeuse et/ou une autre phase liquide. Si une oléfine à polymériser est liquide dans les conditions de température et de pression de la polymérisation, cette oléfine pourra faire partie d'une phase organique liquide distincte de la phase aqueuse liquide. Un telle phase organique liquide peut également comprendre un solvant organique, tel que ceux indiqués ci-dessus, de ladite oléfine.

Les constituants de l'éventuelle phase organique liquide sont suffisamment insolubles dans l'eau pour que, compte tenu de sa quantité mise en jeu, la phase aqueuse contienne toujours plus de 30 % d'eau.

Pour le cas ou le milieu de polymérisation comprend deux phases liquides distinctes, celle-ci peuvent par exemple être en présence de façon que la phase différente de la phase aqueuse représente 1 à 50 % du volume de la phase aqueuse.

La phase aqueuse peut comprendre au moins 40 %, voire au moins 50 %, voire au moins 60 %, voire au moins 70 %, voire au moins 80 % en poids d'eau.

La phase aqueuse peut comprendre sous forme solubilisée un composé organique pouvant être un alcool ou une cétone ou un diol tel qu'un glycol, par exemple l'éthylène glycol, ou le propane diol ou le butane diol. Ce composé organique peut avoir pour fonction d'augmenter la solubilité de l'oléfine à polymériser dans la phase aqueuse.

Le milieu de polymérisation est de préférence agité. L'agitation est de préférence suffisante pour répartir les différentes phases de façon uniforme dans le réacteur.

Au moins un agent dispersant peut être ajouté au milieu de polymérisation. Un tel agent dispersant peut en particulier être utilisé lorsque la milieu de polymérisation comprend une phase organique liquide, auquel cas il aide à la dispersion de ladite phase organique liquide sous forme de gouttelettes entourées par la phase aqueuse continue. Dans ce cas, les constituants (A) et (B) ayant été principalement solubilisés dans la phase organique liquide, la polymérisation se déroule principalement dans les gouttelettes, ces dernières présentant généralement un diamètre moyen compris entre 100 µm et 3 millimètres.

L'agent dispersant peut être l'un de ceux connus pour avoir cette fonction, comme par exemple un alcool polyvinylique, la méthycellulose, une gélatine, le kaolin, le sulfate de baryum, l' hydroxyapatite, le silicate de magnésium, le phosphate tricalcite, ou une combinaison de plusieurs de ces agents dispersants.

L'agent dispersant peut être introduit dans le milieu de polymérisation jusqu'à 10 % en poids par rapport d'eau utilisé et de préférence de 0,01 % à 5 % en poids par rapport au poids d'eau utilisé.

Au moins un agent émulsifiant peut être ajouté au milieu polymérisation. L'usage d'un tel agent émulsifiant est en particulier recommandé lorsque l'on souhaite que la polymérisation mène à un latex, c'est-à-dire à un ensemble de particules de polymère présentant un diamètre moyen en nombre inférieur à 1 micromètre, lesdites particules étant dispersées dans la phase aqueuse. Lorsqu'un agent émulsifiant est utilisé, il n'est généralement pas nécessaire que le milieu de polymérisation contienne un agent dispersant.

A titre d'agent émulsifiant, on peut utiliser l'un quelconque des agents tensio-actifs connus qu'il soient anioniques, non-anioniques ou même cationiques. En particulier, on peut choisir l'agent émulsifiant parmi les anioniques tels que les sels de sodium ou de potassium d'acides gras, notamment le laurate de sodium, le stéarate de sodium, le palmitate de sodium, l'oléate de sodium, les sulfates mixtes de sodium ou de potassium et d'alcool gras, notamment le laurysulfate de sodium, les sels de sodium ou de potassium d'esters sulfosucciniques, les sels de sodium ou de potassium des acides alkylarylsulfoniques, notamment le dodécylbenzène sulfonate de sodium, et les sels de sodium ou de potassium de monosulfonates de monoglycérides gras, ou encore parmi les tensio-actifs non ioniques tels que les produits de réaction entre l'oxyde d'éthylène et les alkylphénols. On peut bien entendu utiliser des mélanges de tels agents tensio-actifs.

L'agent émulsifiant peut être introduit dans le milieu de polymérisation jusqu'à 10 % en poids par rapport au poids d'eau, et de préférence de 0,01 % à 5 % en poids par rapport au poids d'eau.

Dans un tel procédé comprenant un agent émulsifiant et une phase organique liquide, les constituants (A) et (B) ayant été principalement solubilisés dans ladite phase organique liquide, l'agent émulsifiant étant en quantité supérieure à la concentration micellaire critique, la polymérisation se déroule dans les gouttelettes de phase organique liquide, lesquelles présentent généralement un diamètre moyen compris entre 1 µm et 1000 µm, et dans les micelles lesquelles présentent généralement un diamètre moyen compris entre 1 nanomètre et 100 nanomètres. Un tel procédé

est similaire au procédé dit de "polymérisation radicalaire en émulsion" sauf qu'il n'est pas radicalaire. Lorsque dans un tel procédé, on augmente la concentration en agent émulsifiant, on augmente l'importance relative de la polymérisation se déroulant dans les micelles et l'on favorise la formation d'un latex en fin de polymérisation. Dans ce cas de la présence d'une phase organique liquide, lorsque la quantité d'agent émulsifiant est telle que toute la phase organique liquide est présente dans les micelles, le procédé est similaire au procédé dit de "polymérisation radicalaire en microémulsion" sauf que la polymérisation n'est pas radicalaire.

Pour le cas où le milieu de polymérisation comprend une base organique liquide et un agent émulsifiant, il est possible d'ajouter au milieu un co-tensio-actif comme on le fait pour les procédés de polymérisation en miniémulsion. Un tel co-tensio-actif présente généralement une solubilité dans l'eau inférieure à 1 x $10^{-3}$ mole par litre à 20°C. Un tel co-tensio-actif peut, par exemple, être l'hexadécane ou l'alcool cétylique. Il peut être présent jusqu'à 10% en poids par rapport au poids d'eau et de préférence le rapport de la masse d'agent émulsifiant sur celle de co-tensio-actif va de 0,5 à 2. La présence de ce co-tensio-actif permet, grâce également à un cisaillement suffisant du milieu, l'obtention de gouttelettes de phase organique liquide inférieures à 1 μm et favorise la formation d'un latex en fin de polymérisation. Le cisaillement suffisant peut par exemple être obtenu par ultrasons ou par un homogénéisateur (comme un appareil du type ultraturax® ou diax® 600 de la société Heidolph). Une fois obtenue la taille caractéristique (<1 μm) des gouttelettes, l'agitation peut être poursuivie avec un cisaillement moins vigoureux, du type des cisaillements utilisés pour les procédés de polymérisation en suspension.

Pour le cas où un solvant organique a été utilisé celui-ci peut, si cela est souhaité, être éliminé par évaporation.

Le procédé selon l'invention mène à des particules de polymère dont le diamètre peut aller de 10 nanomètres à 5 millimètres.

Pour le cas où la polymérisation comprend un agent émulsifiant, un latex est obtenu. A l'issue de la polymérisation réalisée en présence d'un agent émulsifiant, le latex contient éventuellement des particules ayant tendance à décanter et il peut être souhaité de procéder à une séparation, par exemple par filtration de façon à éliminer ces particules ne faisant pas partie du latex.

Les conditions de polymérisation, à savoir quantité des ingrédients dans le milieu de polymérisation et degré de conversion de monomère en polymère, peuvent être adaptées de façon que le latex présente un taux de solide allant de 0,1 à 50% en poids.

L'oléfine destinée à être polymérisée est introduite sous agitation suffisante du milieu de polymérisation, par exemple une agitation allant de 10 à 10 000 révolutions par minute. L'oléfine peut être introduite sous forme liquide ou gazeuse, suivant son état physique.

Les températures et pressions de polymérisation ont été indiquées ci-dessus.

Pour le cas où seul l'éthylène est polymérisé, un homopolyéthylène haute densité est obtenu. La polymérisation de l'éthylène avec au moins une autre oléfine que l'éthylène mène à l'obtention d'un polymère de l'éthylène de plus faible densité que l'homopolyéthylène haute densité précédemment évoqué. Suivant la quantité et la nature du ou des comonomère(s) de l'éthylène, il est donc possible d'obtenir un polymère de l'éthylène haute densité (polyéthylène haute densité), ou un polymère de l'éthylène moyenne densité (polyéthylène moyenne densité) voire, à fort taux de comonomère, un polymère de l'éthylène basse densité (polyéthylène basse densité).

Comme cela est d'usage pour les polymères de l'éthylène, on entend par "haute densité" le fait que la densité soit supérieure à 0,940, par moyenne densité le fait que la densité aille de 0,925 à 0,940 et par basse densité le fait que la densité soit inférieure à 0,925.

La polymérisation peut donc mener à un latex d'au moins une oléfine, c'est-à-dire à un polymère comprenant des unités polymérisées d'au moins une oléfine, le cas échéant avec d'autres unités. de monomère polymérisé. En particulier, si au moins une oléfine est l'éthylène, un latex d'un polymère de l'éthylène peut être obtenu.

Le procédé selon l'invention peut donc mener à un latex d'un polymère de l'éthylène haute densité ou à un latex d'un polymère de l'éthylène moyenne densité, voire d'un polymère de l'éthylène basse densité.

Dans le cadre de la présente demande, le terme polymère doit être pris dans son sens général, de sorte qu'il recouvre les homopolymères copolymères, interpolymères et mélanges de polymères. Le terme polymérisation doit également être pris dans un sens général équivalent.

L'ensemble des oléfines comprend celui des α-oléfines. Comme oléfines, on peut citer l'éthylène, le propylène, le cyclopentène, le 1-hexène, le 3-méthyl-1-pentène, le 4-méthyl-1-pentène, le 1,4-hexadiène, le 1,9-décadiène, le 1-octène, le 1-décène, et les oléfines cycliques comme le cyclohexène. L'ensemble des oléfines inclut également les composés de formule $CH_2=CH-(CH_2)_n-G$ dans laquelle n représente un nombre entier allant de 2 à 20, et G représente un radical pouvant être choisi dans la liste suivante :

-OH, $-CHOHCH_2OH$, -OT, $-CF_3$, -COOT, -COOH, $-Si(OH)_3$, $-Si(OT)_3$, T représentant un radical hydrocarboné comprenant de 1 à 20 atomes de carbone. On mentionne en particulier les cas où au moins une oléfine est l'éthylène.

Le procédé selon l'invention peut être mené en discontinu (batch en anglais), en semi continu ou en continu.

Les Exemples suivants illustrent la présente invention sans toutefois en limiter la portée. Dans ces exemples, on a utilisé les abréviations suivantes :

- Masse moléculaire moyenne en poids : $\overline{Mw}$
- Polymolécularité (masse moléculaire moyenne en poids/masse moléculaire moyenne en nombre) : $\overline{Mw}/\overline{Mn}$.

EXEMPLE 1 : Polymérisation de l'éthylène

Dans un tube de Schlenck de 200 ml, sous atmosphère d'azote, on place 42 ml de toluène et 67 mg du ligand exo,endo-2,3-bis[2-méthoxycarbonyl-2-(triphényl-phosphoranylidène)acétyl]bicyclo(2,2,1)heptène-5, soit une concentration de 1,9 µmole/ml (Solution 1).

Dans un second tube de Schlenck de 200 ml, on place 41,2 ml de toluène et 56 mg de bis (1,5-cyclo-octadiényl) nickel, soit une concentration de 4,9 µmoles/ml (Solution 2).

Dans un réacteur métallique de 1 litre, muni d'une agitation, on introduit à température ambiante, successivement, sous atmosphère d'azote et sous agitation de 250 tpm, 500 ml de toluène, 10 ml de Solution 2, et 5 ml de Solution 1, soit un rapport molaire nickel/ligand de 5. Le milieu réactionnel est ensuite maintenu sous 1 bar d'azote et à 65°C pendant 10 minutes.

On introduit ensuite de l'éthylène de manière à avoir une pression absolue dans le réacteur de 5 bars. La pression est maintenue constante tout au long de la polymérisation grâce à une alimentation continue d'éthylène dans le réacteur.

Après une heure de polymérisation, on récupère 86 g de polyéthylène, soit une productivité de 8,8 x $10^6$ g de polymère/mole de ligand.

Le polyéthylène présente les caractéristiques suivantes :

- $\overline{Mw}$ = 35 600 g/mole ;
- $\overline{Mw}/\overline{Mn}$ = 10,2 ;
- Point de fusion (mesuré par DSC - Differential Scanning Calorimetry) = 129,4°C

EXEMPLE 2 : Polymérisation du propylène

Dans un tube de Schlenck de 200 ml, sous atmosphère d'azote, on place 51 ml de toluène et 86 mg du ligand exo,endo-2,3-bis[2-méthoxycarbonyl-2-(triphényl-phosphoranylidène)acétyl]bicyclo(2,2,1)heptène-5, soit une concentration de 2,6 µmole/ml (Solution 3).

Dans un second tube de Schlenck de 200 ml, on place 37,1 ml de toluène et 101 mg de bis (1,5-cyclo-octadiényl)nickel, soit une concentration de 2,6 µmoles/ml (Solution 4).

Dans un réacteur métallique de 1 litre, muni d'une agitation, on introduit à température ambiante, successivement, sous atmosphère d'azote et sous agitation de 250 tpm, 500 ml de toluène, 10 ml de Solution 4, et 5 ml de Solution 3, soit un rapport molaire nickel/ligand de 2. Le milieu réactionnel est ensuite maintenu sous 1 bar d'azote et à 65°C pendant 10 minutes.

On introduit ensuite du polypropylène de manière à avoir une pression absolue dans le réacteur de 5 bars. La pression est maintenue constante tout au long de la polymérisation grâce à une alimentation continue de polypropylène dans le réacteur.

Après une heure de polymérisation, on récupère une solution jaunâtre qui, après évaporation, fournit 1 g d'un polymère ayant l'aspect d'une graisse. La productivité est de 0,1 x $10^6$ g de polymère/mole de ligand.

- $\overline{Mw}$ = 6 941 g/mole ;
- $\overline{Mw}/\overline{Mn}$ = 4,5 ;
- Le point de fusion (mesuré par DSC) est de 119°C.

EXEMPLE 3 : Copolymérisation de l'éthylène et du propylène

Dans un tube de Schlenck de 200 ml, sous atmosphère d'azote, on place 56,8 ml de toluène et 91 mg du ligand exo,endo-2,3-bis[2-méthoxycarbonyl-2-(triphényl-phosphoranylidène)acétyl]bicyclo(2,2,1)heptène-5, soit une concentration de 2,0 µmoles/ml (Solution 5).

Dans un second tube de Schlenck de 200 ml, on place 91,4 ml de toluène et 132 mg de bis (1,5-cyclo-octadiényl)nickel, soit une concentration de 5,3 µmoles/ml (Solution 6).

Dans un réacteur métallique de 1 litre, muni d'une agitation, on introduit à température ambiante, successivement, sous atmosphère d'azote et sous agitation de 250 tpm, 500 ml de toluène, 20 ml de Solution 6, et 5 ml de Solution 5, soit un rapport molaire nickel/ligand de 10,8. Le milieu réactionnel est ensuite maintenu sous 1 bar d'azote et à 65°C pendant 10 minutes.

On introduit ensuite un mélange gazeux 80/20 massique éthylène/propylène, de manière à avoir une pression

absolue dans le réacteur de 5 bars. La pression est maintenue constante tout au long de la polymérisation grâce à une alimentation continue du mélange 80/20 massique éthylène-propylène dans le réacteur.

Après une heure de polymérisation, on récupère , 92 g d'un polymère ayant l'aspect d'une graisse. La productivité est de 9,4 x $10^6$ g de polymère/mole de ligand.

- $\overline{Mw}$ = 4 166 g/mole
- $\overline{Mw}/\overline{Mn}$ = 2,9

L'infrarouge du produit indique une incorporation du propylène qui ne dépasse pas 5%.

<u>EXEMPLE 4</u> : <u>Copolymérisation de l'éthylène et du propylène en émulsion</u>

Dans un tube de Schlenck de 2,5 1, on introduit 1,5 1 d'eau permutée, dans laquelle on fait barboter de l'azote pendant 24 h. On prélève 200 ml de cette eau que l'on introduit dans un tube de Schlenck de 300 ml avec 6 g de laurylsulfate de sodium (SLS) et l'on fait barboter de l'azote pendant 2 h. On ajoute ensuite 3 ml d'hexadécane. Le contenu du deuxième tube de Schlenck est réintroduit dans le premier tube.

Dans un tube de Schlenck de 200 ml, on introduit 35 mg du ligand exo, endo-2,3-bis[2-méthoxycarbonyl-2 (triphénylphosphoranylidène)acétyl]bicyclo(2,2,1)heptène-5 et 263 mg de bis (cis,cis-1,5-cyclooctadiène)nickel, sous forme pulvérulente (soit un rapport molaire nickel/ligand de 22,2), puis 50 ml de toluène ; et l'on agite pendant 1 minute à température ambiante. Cette solution est additionnée à la phase aqueuse. Le tout est ensuite homogénéisé, toujours sous atmosphère d'azote, au moyen d'un homogénéisateur Ultraturax® pendant 1 minute à 1 500 révolutions par minute. La miniémulsion obtenue est introduite dans un réacteur métallique de 6 l muni d'une agitation mécanique et maintenu à 45°C.

Le réacteur est placé sous 2 bars d'un mélange 76/24 massique éthylène/propylène, et sa température est portée à 65°C avec une agitation de 400 révolutions par minute. Lorsque la température a atteint 65°C, la pression d'éthylène est portée à 20 bars et maintenue constante pendant 1 heure.

La température est ensuite abaissée à 20°C et le réacteur est dégazé, progressivement en 20 minutes. On récupère 29,3 g de polymère sous la forme d'une dispersion qui sédimente lentement. Le point de fusion du produit récupéré est de 110°C.

## Revendications

**1.** Procédé de polymérisation d'au moins une oléfine dans un milieu diluant en présence d'un complexe bimétallique du nickel formé *in situ* à partir de :

(A) au moins un ligand représenté par la formule générale (I) :

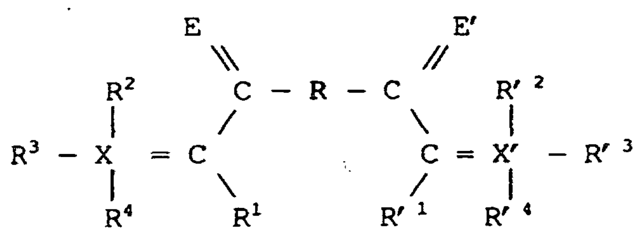

(I)

dans laquelle :

- E et E' représentent chacun indépendamment un atome d'oxygène ou de soufre ;
- X et X' représentent chacun indépendamment un atome de phosphore, d'arsenic ou d'antimoine ;
- les radicaux $R^1$ et $R'^1$, identiques ou différents, sont choisis parmi :
  - . l'hydrogène ;
  - . les radicaux alkyle, linéaires, ramifiés ou cycliques ;
  - . les radicaux aryle ;
  - . les radicaux arylalkyle ;
  - . les radicaux alkylaryle ;

. les halogènes ;
. le radical hydroxyle ;
. les radicaux alkoxyde ;

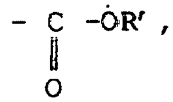

où R' représente un radical hydrocarboné comprenant de 1 à 15 atomes de carbone ;
. $-SO_3Y$, où Y est choisi parmi Li, Na, $NH_4^+$, $NR_4''^+$ (où R" représente un radical hydrocarboné comprenant de 1 à 15 atomes de carbone) ;

- les radicaux $R^2$, $R'^2$, $R^3$, $R'^3$, $R^4$ et $R'^4$, identiques ou différents, sont choisis parmi les radicaux alkyle, linéaires ramifiés ou cycliques, et les radicaux arylalkyle ;
- R est un radical bivalent choisi parmi les radicaux hydrocarbonés bivalents comprenant de 2 à 38 atomes de carbone ; et le radical 1,1'-ferrocèhylène éventuellement substitué ; et

(B) au moins un composé du nickel choisi parmi :

(B1) les complexes de nickel de degré d'oxydation zéro, représentés par la formule générale (II) :

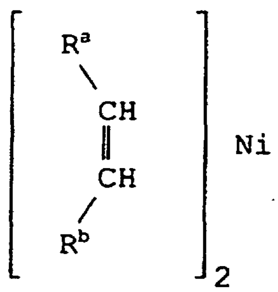

(II)

dans laquelle $R^a$ et $R^b$ représentent chacun indépendamment un atome d' hydrogène, ou un radical alkyle, linéaires, ramifiés ou cycliques, aryle, arylalkyle ou alkylaryle, pouvant posséder jusqu'à 8 atomes de carbone, $R^a$ et $R^b$ pouvant également former ensemble un groupement aliphatique divalent de 2 à 10 atomes de carbone et pouvant posséder jusqu'à trois doubles liaisons oléfiniques comme seules insaturations carbone-carbone ;

(B2) les nickels n-allyles, représentés par la formule générale (III) :

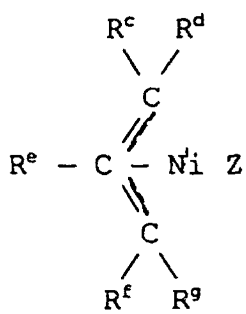

(III)

dans laquelle :

- les radicaux $R^c$, $R^d$, $R^e$, $R^f$, $R^g$, identiques ou différents, sont choisis parmi l'hydrogène et les radicaux

alkyle, linéaires, ramifiés ou cycliques, aryle, arylalkyle ou alkylaryle, ayant jusqu'à 8 atomes de carbone ;

- les lignes en pointillés représentent la délocalisation électronique sur les trois atomes de carbone contigus ;
- un radical $R^c$ ou $R^d$ pouvant également former avec un radical $R^e$ ou $R^f$ ou $R^g$ un groupe alcène divalent ayant de 2 à 10 atomes de carbone et pouvant posséder jusqu'à trois doubles liaisons oléfiniques ; et
- Z représente un halogène, un alcoxy ou un alcanoyloxyle ;

(B3) les composés de type bis-allyle nickel représentés par la formule générale (IV) :

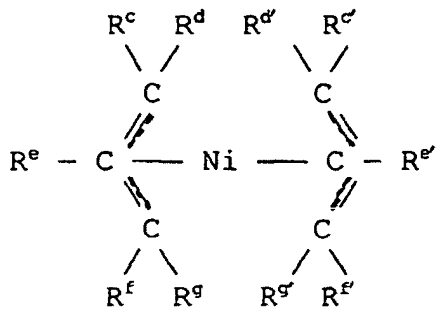

(IV)

dans laquelle :

- les radicaux $R^e$ à $R^g$, et $R^{e'}$ à $R^{g'}$, identiques ou différents, sont choisis parmi l'hydrogène et les radicaux alkyle, linéaires, ramifiés ou cycliques, aryle, arylalkyle ou alkylaryle ayant jusqu'à 8 atomes de carbone ;
- les lignes en pointillés représentent la délocalisation électronique sur les trois atomes de carbone contigus ;
- un radical $R^c$ ou $R^d$ pouvant former avec un radical $R^e$ ou $R^f$ ou $R^g$ un groupe alcène divalent ayant de 2 à 10 atomes de carbone et pouvant posséder jusqu'à trois doubles liaisons oléfiniques ;
- un radical $R^{c'}$ ou $R^{d'}$ pouvant former avec un radical $R^{e'}$ ou $R^{f'}$ ou $R^{g'}$ un groupe alcène divalent ayant de 2 à 10 atomes de carbone et pouvant posséder jusqu'à trois doubles liaisons oléfiniques.

**2.** Procédé selon la revendication 1, **caractérisé par le fait que**, dans la formule (I), E et E' sont séparés par des atomes intermédiaires liés entre eux par des liaisons covalentes ou de coordination.

**3.** Procédé selon l'une des revendications 1 et 2, **caractérisé par le fait que**, dans la formule (I), le nombre minimal d'atomes entre E et E' est de 3 à 40.

**4.** Procédé selon l'une des revendications 1 à 3, **caractérisé par le fait que** le ligand de formule (I) comprend l'une des structures suivantes :

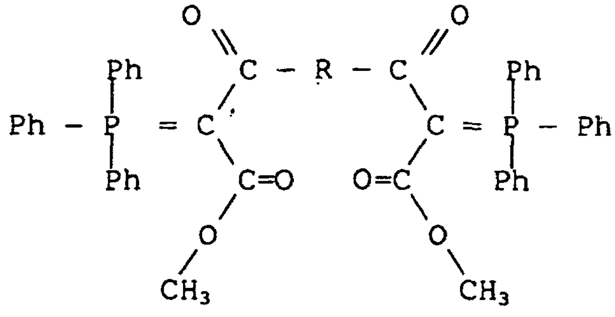

(Ia)

où R représente un radical 5, 6-bicyclo[ 2.2.1]heptène-2; $-(CH_2)_4-$ ou $-(CH_2)_8-$ ;

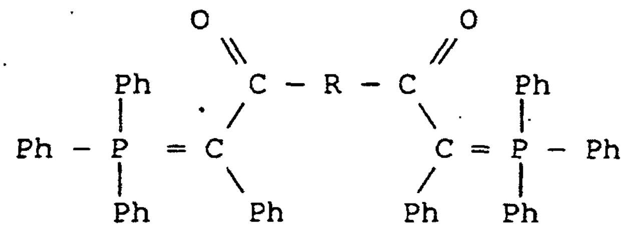

(Ib)

où R représente un radical 5,6-bicyclo[2.2.1]-heptène-2 ; ou $-(CH_2)_8-$ ;

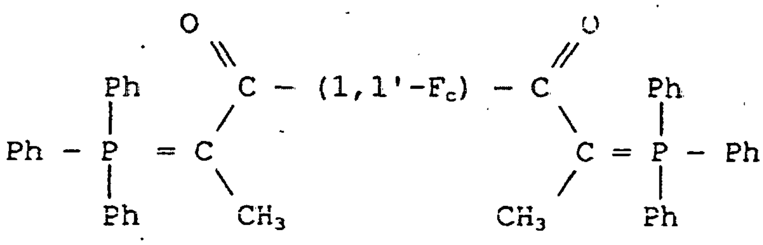

(Ic)

où 1,1'-$F_c$ représente un radical-1,1'-ferrocènylène ; et

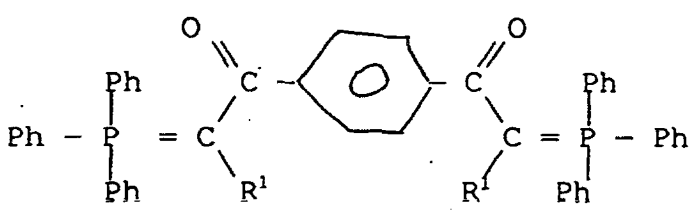

(Id)

où les $R^1$ représentent H ou Ph ou $SO_3Na$ ou

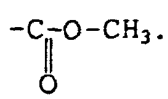

5. Procédé selon l'une des revendications 1 à 4, **caractérisé par le fait que** le composé du nickel ($B_1$) est choisi parmi :

. le bis(1,5-cyclooctadiène)nickel (O) ;
. le bis (cyclooctatétraène) nickel (0) ; et
. le bis(1,3,7-octatriène)nickel (O).

6. Procédé selon l' une des revendications 1 à 5, **caractérisé par le fait que**, dans un composé de nickel (B2) ou (B3), un groupement n-allyle possède de 3 à 12 atomes de carbone ne possédant pas d'autres insaturations aliphatiques, sauf s'il contient un cycle fermé.

7. Procédé selon l'une des revendications 1 à 6, **caractérisé par le fait que** le composé du nickel (B2) est choisi parmi :

. le chlorure de π-allyl nickel ;

- le bromure de π-allyl nickel ;
- le chlorure de π-crotyl nickel ;
- le chlorure de π-méthylallyl nickel ;
- le chlorure de π-éthylallyl nickel ;
- le bromure de π-cyclopentylallyl nickel ;
- le chlorure de π-cyclooctényl nickel ;
- le chlorure de π-cyclooctadiényl nickel ;
- le bromure de π-cynnamyl nickel ;
- le chlorure de π-phénylallyl nickel ;
- le bromure de π-cyclohexenyl nickel ;
- le chlorure de π-cyclododécényl nickel ;
- le chlorure de π-cyclododécatriényl nickel ;
- l'acétate de π-allyl nickel ;
- le propionate de π-méthylallyl nickel
- l'octoate de π-cyclooctényl nickel ;
- le méthoxylate de π-cyclooctényl nickel ; et
- l'éthoxylate de π-allyl nickel.

**8.** Procédé selon l'une des revendications 1 à 7, **caractérisé par le fait que** le composé du nickel (B3) est choisi parmi :

- le nickel bis-π-allylique ;
- le nickel bis-π-méthallylique ;
- le nickel bis-π-cynnamyle ;
- le nickel bis-π-octadiényle ;
- le nickel bis-π-cyclohexenyle ;
- le nickel π-allyl-π-méthallylique ; et
- le nickel bis-π-cyclooctatriényle.

**9.** Procédé selon l'une des revendications 1 à 8, **caractérisé par le fait que** les composants (A) et (B) sont introduits dans des quantités telles que le rapport molaire nickel sur ligand(s) est compris entre 1 et 100.

**10.** Procédé selon la revendication 9, **caractérisé par le fait que** les composants (A) et (B) sont introduits dans des quantités telles que le rapport molaire nickel sur ligand(s) est compris entre 2 et 50.

**11.** Procédé selon l'une des revendications 1 à 10, **caractérisé par le fait que** :

- dans une première étape, on introduit dans un réacteur, séparément ou simultanément, chacun des constituants (A) et (B) se trouvant en solution dans un solvant inerte, ainsi que le milieu réactionnel ; et
- dans une seconde étape, on introduit le ou les oléfines, la (co) polymérisation ayant lieu à une température comprise entre 0 et 300°C et à une pression totale absolue allant de 1 à 200 bars.

**12.** Procédé selon la revendications 11, **caractérisé par le fait que** l'on choisit le solvant inerte des constituants (A) et (B) parmi les hydrocarbures aliphatiques saturés, les hydrocarbures alicycliques saturés, les hydrocarbures aromatiques et leurs mélanges.

**13.** Procédé selon les revendications 11 et 12, **caractérisé par le fait que** le milieu réactionnel est constitué par un milieu organique.

**14.** Procédé selon l'une des revendications 11 et 12, **caractérisé par le fait que** le milieu réactionnel comprend une phase aqueuse liquide continue, laquelle comprend plus de 30% en poids d'eau.

**15.** Procédé selon la revendication 14, **caractérisé par le fait que** la phase aqueuse est la seule phase liquide.

**16.** Procédé selon la revendication 14, **caractérisé par le fait que** le milieu comprend une phase organique liquide.

**17.** Procédé selon l'une des revendications 13 à 16, **caractérisé par le fait que** l'on choisit le milieu ou la phase organique parmi :

- les hydrocarbures aliphatiques saturés, les hydrocarbures alicycliques saturés, les hydrocarbures aromatiques et leurs mélanges et
- dans la mesure où les conditions de polymérisation les conservent sous forme liquide, les $\alpha$-oléfines, les diènes non conjugués et leurs mélanges.

**18.** Procédé selon l'une des revendications 14 à 17, **caractérisé par le fait que** le milieu de polymérisation comprend un agent dispersant.

**19.** Procédé selon la revendication 18, **caractérisé par le fait que** l'agent dispersant est présent jusqu'à 10% en poids par rapport au poids d'eau.

**20.** Procédé selon la revendication 19, **caractérisé par le fait que** l'agent dispersant est présent, à raison de 0,01 à 5% en poids par rapport au poids d'eau.

**21.** Procédé selon l'une des revendications 14 à 20, **caractérisé par le fait que** le milieu de polymérisation comprend un agent émulsifiant.

**22.** Procédé selon la revendication 21, **caractérisé par le fait que** l'agent émulsifiant est présent jusqu'à 10% en poids par rapport au poids d'eau.

**23.** Procédé selon la revendication 22, **caractérisé par le fait que** l'agent émulsifiant est présent à raison de 0,01 à 5% en poids par rapport au poids d'eau.

**24.** Procédé selon l'une des revendications 21 à 23, **caractérisé par le fait que** l'agent émulsifiant est en quantité supérieure à la concentration micellaire critique.

**25.** Procédé selon la revendication 24, **caractérisé par le fait que** l'agent émulsifiant est en quantité suffisante pour que la polymérisation se déroule essentiellement dans les micelles.

**26.** Procédé selon l'une des revendications 21 à 25, **caractérisé par le fait que** le milieu de polymérisation comprend une phase organique liquide et un co-tensio-actif.

**27.** Procédé selon la revendication 26, **caractérisé par le fait que** le co-tensio-actif présente une solubilité dans l'eau inférieure à $1 \times 10^{-3}$ mole par litre à 20°C.

**28.** Procédé selon l'une des revendications 26 et 27, **caractérisé par le fait que** le co-tensio-actif est présent jusqu'à 10% en poids par rapport au poids d'eau.

**29.** Procédé selon l'une des revendications 26 à 28, **caractérisé par le fait que** le rapport de la masse d'agent émulsifiant sur celle de co-tensio-actif va de 0,5 à 2.

**30.** Procédé selon l'une des revendications 11 à 29, **caractérisé par le fait que** la concentration du constituant (A) dans le solvant inerte est comprise entre 0,1 micromole et 100 millimoles par litre de solution.

**31.** Procédé selon l'une des revendications 11 à 30, **caractérisé par le fait que** la concentration du constituant (B) dans le solvant inerte est comprise entre 0,1 micromole et 200 millimoles par litre de solution.

**32.** Procédé selon l'une des revendications 11 à 31, **caractérisé par le fait qu'**il est réalisé sous atmosphère inerte.

**33.** Procédé selon l'une des revendications 11 à 32, **caractérisé par le fait que** dans une étape préliminaire, on met en contact les constituants (A) et (B) en solution dans leur solvant inerte, pendant une durée de 30 secondes à 10 minutes, avant leur introduction dans le milieu réactionnel, cette étape de précontact étant réalisée sous atmosphère inerte, à une température comprise entre 0 et 100°C.

**34.** Procédé selon la revendication 33, **caractérisé par le fait que** cette étape de précontact est réalisée à une température comprise entre 10 et 70°C.

**35.** Procédé selon l'une des revendications 11 à 32, **caractérisé par le fait que** les constituants (A) et (B) qui se

trouvent en solution dans leur solvant inerte, sont introduits de façon séparée dans le milieu réactionnel, celui-ci étant maintenu à une température de 0 à 100°C.

**36.** Procédé selon la revendication 35, **caractérisé par le fait que** le milieu réactionnel est maintenu à une température de 10 à 70'C.

**37.** Procédé selon l'une des revendications 11 à 36, **caractérisé par le fait que** l'on conduit la (co)polymérisation à une température entre 25 et 200°C.

**38.** Procédé selon l'une des revendications 11 à 37, **caractérisé par le fait que** l'on conduit la (co)polymérisation à une pression totale absolue de 1 à 100 bars.

**39.** Procédé selon l'une des revendications 11 à 38, **caractérisé par le fait que** l'on introduit la ou les oléfines, sous forme liquide ou gazeuse, destinées à être polymérisées, sous agitation suffisante du milieu de polymérisation.

**40.** Procédé selon l'une des revendications 11 à 39, **caractérisé par le fait que** les oléfines sont choisies parmi l'éthylène, les $\alpha$-oléfines, les oléfines cycliques et les composés de formule :

$$CH_2 = CH\text{-}(CH_2)_n\text{-}G\text{-}$$

dans laquelle :

- n représente un nombre entier de 2 à 20 ; et
- G représente un radical choisi parmi :
  -OH ; $CHOHCH_2OH$ ; OT ; $-CF_3$ ; -COOT ; -COOH ; -Si $(OH)_3$ ; -Si $(OT)_3$,
  T représentant un radical hydrocarboné comprenant de 1 à 20 atomes de carbone.

**41.** Procédé selon l'une des revendications 11 à 39, **caractérisé par le fait qu'**au moins une oléfine est l'éthylène.

**42.** Procédé selon l'une des revendications 21 à 41, **caractérisé par le fait que** la polymérisation est réalisée en présence d'un agent émulsifiant, menant alors à un latex, le cas échéant après une étape de filtration.

**43.** Procédé selon la revendication 42, **caractérisé par le fait que** le latex est un polyéthylène haute densité ou un polyéthylène moyenne densité ou un polyéthylène basse densité.

**Patentansprüche**

**1.** Verfahren zur Polymerisation wenigstens eines Olefins. in einem Verdünnungsmedium in Gegenwart eines Nickel-Bimetallkomplexes, der *in situ* gebildet wird aus:

(A) wenigstens einem Liganden der allgemeinen Formel (I) :

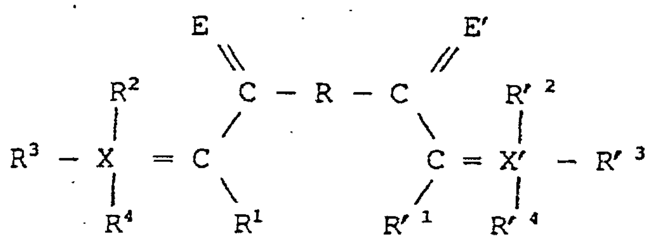

(I)

worin:

- E und E' jeweils unabhängig ein Sauerstoffoder Schwefelatom darstellen;

- X und X' jeweils unabhängig ein Phosphor-, Arsen- oder Antimonatom darstellen;

- die Reste $R^1$ und $R'^1$, die gleich oder verschieden sein können, ausgewählt sind aus:

  . Wasserstoff;
  . linearen, verzweigten oder cyclischen Alkylresten;
  . Arylresten;
  . Arylalkylresten;
  . Alkylarylresten;
  . Halogenen;
  . einem Hydroxyrest;
  . Alkoholatresten;
  .

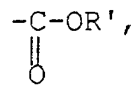

  worin R' einen Kohlenwasserstoffrest mit 1 bis 15 Kohlenstoffatomen darstellt;
  . $-SO_3Y$, worin Y ausgewählt ist aus Li, Na, $NH_4^+$, $NR_4''^+$ (worin R'' einen Kohlenwasserstoffrest mit 1 bis 15 Kohlenstoffatomen darstellt;

- die Reste $R^2$, $R'^2$, $R^3$, $R'^3$, $R^4$ und $R'^4$, die gleich oder verschieden sein können, ausgewählt sind aus Alkylresten, linear, verzweigt oder cyclisch, und Arylalkylresten;

- R ein divalenter Rest ist, der ausgewählt ist aus divalenten Kohlenwasserstoffresten mit 2 bis 38 Kohlenstoffatomen; und einem gegebenenfalls substituierten 1,1'-Ferrccenylen-Rest; und

(B) wenigstens einer Nickelverbindung, die ausgewählt ist aus:

(B1) Nickelkomplexen der Oxidationsstufe Null, dargestellt durch die allgemeine Formel (II) :

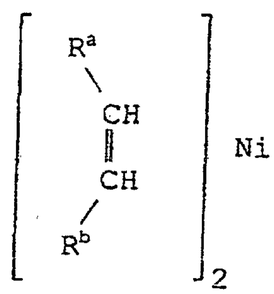

(II)

worin $R^a$ und $R^b$ jeweils unabhängig ein Wasserstoffatom oder einen linearen, verzweigten oder cyclischen Alkyl-, einen Aryl-, einen Arylalkyl- oder einen Alkylarylrest darstellen, der bis zu 8 Kohlenstoffatome besitzen kann, wobei $R^a$ und $R^b$ ferner zusammen eine divalente aliphatische Gruppe mit 2 bis 10 Kohlenstoffatomen bilden können und bis zu drei olefinische Doppelbindungen als einzige ungesättigte Kohlenstoff-Kohlenstoff-Bindungen besitzen können;

(B2) π-Allyl-Nickel-Verbindungen, dargestellt durch die allgemeine Formel (III)

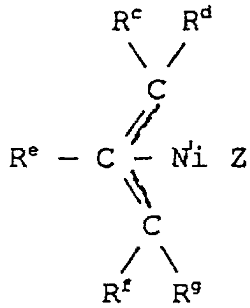

(III)

worin:

- die Reste $R^c$, $R^d$, $R^e$, $R^f$, $R^g$, die gleich oder verschieden sein können, ausgewählt sind aus Wasserstoff und linearen, verzweigten oder cyclischen Alkyl-, Aryl-, Arylalkyl- oder Alkylarylresten, die bis zu 8 Kohlenstoffatome aufweisen;
- die gepunkteten Linien die Elektronendelokalisierung über die drei benachbarten Kohlenstoffatome darstellen;
- wobei ein Rest $R^c$ oder $R^d$ ferner mit einem Rest $R^e$ oder $R^f$ oder $R^g$ eine divalente Alkengruppe bilden kann, die 2 bis 10 Kohlenstoffatome aufweist und bis zu drei bis zu drei olefinische Doppelbindungen besitzen kann; und
- Z ein Halogen, ein Alkoxy oder ein Alkanoyloxy darstellt;

(B3) Verbindungen vom Bisallyl-Nickel-Typ, dargestellt durch die allgemeine Formel

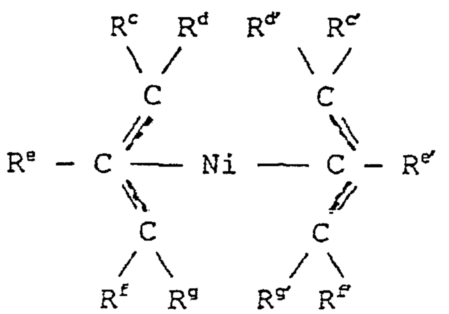

(IV)

worin:

- die Reste $R^e$ bis $R^g$ und $R^{e'}$ bis $R^{g'}$, die gleich oder verschieden sein können, ausgewählt sind aus Wasserstoff und linearen, verzweigten oder cyclischen Alkyl-, Aryl-, Arylalkyl- oder Alkylarylresten mit bis zu 8 Kohlenstoffatomen;
- die gepunkteten Linien die Elektronendelokalisierung über die drei benachbarten Kohlenstoffatome darstellen;
- wobei einer der Reste $R^c$ oder $R^d$ mit einem der Reste $R^e$ oder $R^f$ oder $R^g$ eine divalente. Alkengruppe bilden kann, die 2 bis 10 Kohlenstoffatome aufweist und bis zu drei olefinische Doppelbindungen besitzen kann;
- einer der Reste $R^{c'}$ oder $R^{d'}$ mit einem der Reste $R^{e'}$ oder $R^{f'}$ oder $R^{g'}$ eine divalente Alkengruppe bilden kann, die 2 bis 10 Kohlenstoffatome aufweist und bis zu drei olefinische Doppelbindungen

besitzen kann.

2. Verfahren nach Anspruch 1, **dadurch gekennzeichnet, daß** E und E' in der Formel (I) durch Zwischenatome getrennt sind, die untereinander durch kovalente Bindungen oder durch Koordination verbunden sind.

3. Verfahren nach einem der Ansprüche 1 und 2, **dadurch gekennzeichnet, daß** die Minimalzahl der Atome zwischen E und E' in der Formel (I) 3 bis 40 ist.

4. Verfahren nach einem der Ansprüche 1 bis 3, **dadurch gekennzeichnet, daß** der Ligand der Formel (I) eine der folgenden Strukturen umfaßt:

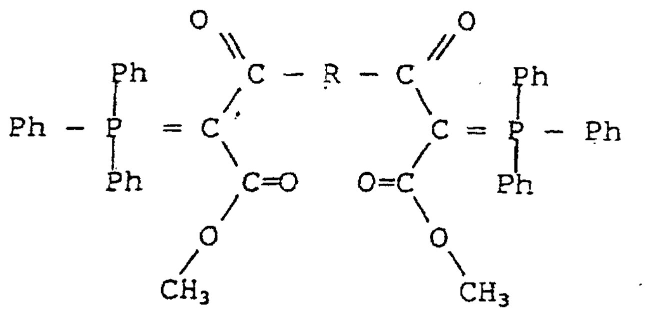

(Ia)

worin R einen Rest 5,6-Bicyclo[2.2.1]hepten-2; $-(CH_2)_4-$oder $-(CH_2)_8-$ darstellt;

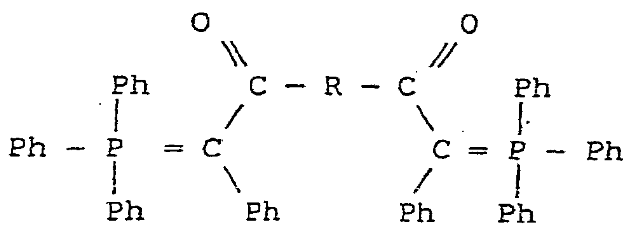

(Ib)

worin R einen Rest 5,6-Bicyclo[2.2.1]hepten-2; oder $-(CH_2)_8-$ darstellt;

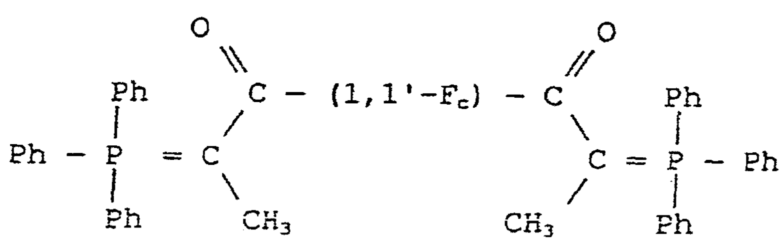

(Ic)

worin 1,1'- $F_c$ einen 1,1'-Ferrocenylen-Rest darstellt; und

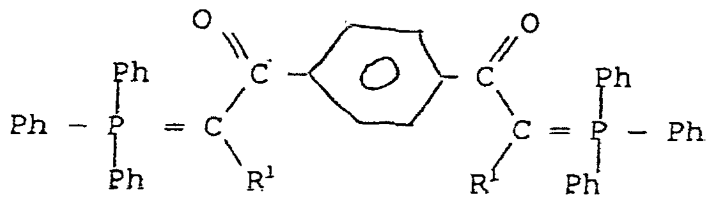

(Id)

worin die $R^1$ H oder Ph oder $SO_3Na$ oder

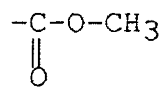

darstellen;

**5.** Verfahren nach einem der Ansprüche 1 bis 4, **dadurch gekennzeichnet, daß** die Nickelverbindung ($B_1$) ausgewählt ist aus:

. Bis(1,5-cyclooctadien)nickel (O);
. Bis(cyclooctatetraen)nickel(0); und
. Bis(1,3,7-octatrien)nickel (0).

**6.** Verfahren nach einem der Ansprüche 1 bis 5, **dadurch gekennzeichnet, daß** in einer Nickelverbindung (B2) oder (B3) eine π-Allyl-Gruppe 3 bis 12 Kohlenstoffatome besitzt, wobei sie keine anderen ungesättigten aliphatischen Bindungen besitzt, außer wenn sie einen geschlossenen Ring enthält.

**7.** Verfahren nach einem der Ansprüche 1 bis 6, **dadurch gekennzeichnet, daß** die Nickelverbindung (B2) ausgewählt ist aus:

. π-Allyl-Nickelchlorid;
. π-Allyl-Nickelbromid;
. π-Crotyl-Nickelchlorid;
. π-Methylallyl-Nickelchlorid;
. π-Ethylallyl-Nickelchlorid;
. π-Cyclopentylallyl-Nickelbromid;
. π-Cyclooctenyl-Nickelchlorid;
. π-Cyclooctadienyl-Nickelchlorid;
. π-Cinnamyl-Nickelbromid;
. π-Phenylallyl-Nickelchlorid;
. π-Cyclohexenyl-Nickelbromid;
. π-Cyclododecenyl-Nickelchlorid;
. π-Cyclododecatrienyl-Nickelchlorid;
. π-Allyl-Nickelacetat;
. π-Methylallyl-Nickelpropionat;
. π-Cyclooctenyl-Nickeloctoat;
. π-Cyclooctenyl-Nickelmethoxylat; und
. π-Allyl-Nickelethoxylat.

**8.** Verfahren nach einem der Ansprüche 1 bis 7, **dadurch gekennzeichnet, daß** die Nickelverbindung (B3) ausgewählt ist aus:

. Bis-π-Allyl-Nickel;
. Bis-π-Methallyl-Nickel;

. Bis-π-Cinnamyl-Nickel;
. Bis-π-Octadienyl-Nickel;
. Bis-π-Cyclohexenyl-Nickel;
. π-Allyl-π-Methallyl-Nickel; und
. Bis-π-Cyclooctatrienyl-Nickel.

**9.** Verfahren nach einem der Ansprüche 1 bis 8, **dadurch gekennzeichnet, daß** die Komponenten (A) und (B) in solchen Mengen eingebracht werden, daß das Molverhältnis von Nickel zu Ligand(en) zwischen 1 und 100 liegt.

**10.** Verfahren nach Anspruch 9, **dadurch gekennzeichnet, daß** die Komponenten (A) und (B) in solchen Mengen eingebracht werden, daß das Molverhältnis von Nickel zu Ligand(en) zwischen 2 und 50 liegt.

**11.** Verfahren nach einem der Ansprüche 1 bis 10, **dadurch gekennzeichnet, daß** man:

- in einem ersten Schritt in einen Reaktor, getrennt oder gleichzeitig-, jede der Komponenten (A) und (B), die sich in einem inerten Lösungsmittel in Lösung befinden, sowie das Reaktionsmedium einbringt; und

- in einem zweiten Schritt das oder die Olefin(e) einbringt, wobei die (Co)polymerisation bei einer Temperatur zwischen 0 und 300°C und einem absoluten Gesamtdruck von 1 bis 200 bar stattfindet.

**12.** Verfahren nach Anspruch 11, **dadurch gekennzeichnet, daß** das inerte Lösungsmittel für die Komponenten (A) und (B) ausgewählt ist aus gesättigten aliphatischen Kohlenwasserstoffen, gesättigten alicyclischen Kohlenwasserstoffen, aromatischen Kohlenwasserstoffen und Mischungen davon.

**13.** Verfahren nach den Ansprüchen 11 und 12, **dadurch gekennzeichnet, daß** das Reaktionsmedium aus einem organischen Medium besteht.

**14.** Verfahren nach einem der Ansprüche 11 und 12, **dadurch gekennzeichnet, daß** das Reaktionsmedium eine kontinuierliche flüssige wäßrige Phase umfaßt, welche mehr als 30 Gew.-% Wasser umfaßt.

**15.** Verfahren nach Anspruch 14, **dadurch gekennzeichnet, daß** die wäßrige Phase die einzige flüssige Phase ist.

**16.** Verfahren nach Anspruch 14, **dadurch gekennzeichnet, daß** das Medium eine flüssige organische Phase umfaßt.

**17.** Verfahren nach einem der Ansprüche 13 bis 16, **dadurch gekennzeichnet, daß** das Medium oder die organische Phase ausgewählt sind aus:

- gesättigten aliphatischen Kohlenwasserstoffen, gesättigten -alicyclischen Kohlenwasserstoffen, aromatischen Kohlenwasserstoffen und Mischungen davon; und

- soweit sie unter den Polymerisationsbedingungen in flüssiger Form vorliegen, α-Olefinen, nicht konjugierten Dienen und Mischungen davon.

**18.** Verfahren nach einem der Ansprüche 14 bis 17, **dadurch gekennzeichnet, daß** das Polymerisationsmedium ein Dispersionsmittel umfaßt.

**19.** Verfahren nach Anspruch 18, **dadurch gekennzeichnet, daß** das Dispersionsmittel in bis zu 10 Gew.-%, bezogen auf das Gewicht des Wassers, vorliegt.

**20.** Verfahren nach Anspruch 19, **dadurch gekennzeichnet, daß** das Dispersionsmittel in einer Menge von 0,01 bis 5 Gew.-%, bezogen auf das Gewicht des Wassers, vorliegt.

**21.** Verfahren nach einem der Ansprüche 14 bis 20, **dadurch gekennzeichnet, daß** das Polymerisationsmedium ein Emulgiermittel umfaßt.

**22.** Verfahren nach Anspruch 21, **dadurch gekennzeichnet, daß** das Emulgiermittel in bis zu 10 Gew.-%, bezogen auf das Gewicht des Wassers, vorliegt.

23. Verfahren nach Anspruch 22, **dadurch gekennzeichnet, daß** das Emulsionsmittel in einer Menge von 0,01 bis 5 Gew.-%, bezogen auf das Gewicht des Wassers, vorliegt.

24. Verfahren nach einem der Ansprüche 21 bis 23, **dadurch gekennzeichnet, daß** das Emulgiermittel in einer Menge vorliegt, die über der kritischen Mizellkonzentratian liegt.

25. Verfahren nach Anspruch 24, **dadurch gekennzeichnet, daß** das Emulgiermittel in einer Menge vorliegt, die ausreicht, daß die Polymerisation im wesentlichen in den Mizellen abläuft.

26. Verfahren nach einem der Ansprüche 21 bis 25, **dadurch gekennzeichnet, daß** das Polymerisationsmedium eine flüssige organische Phase und ein Cotensid umfaßt;

27. Verfahren nach Anspruch 26, **dadurch gekennzeichnet, daß** das Cotensid eine Löslichkeit in Wasser von unter $1 \times 10^{-3}$ Mol pro Liter bei 20°C aufweist.

28. Verfahren nach einem der Ansprüche 26 und 27, **dadurch gekennzeichnet, daß** das Cotensid in bis zu 10 Gew.-%, bezogen auf das Gewicht des Wassers, vorliegt.

29. Verfahren nach einem der Ansprüche 26 bis 28, **dadurch gekennzeichnet, daß** das Verhältnis der Masse des Emulgiermittels zu der des Cotensids 0,5 bis 2 beträgt.

30. Verfahren nach einem der Ansprüche 11 bis 29, **dadurch gekennzeichnet, daß** die Konzentration der Komponente (A) in dem inerten Lösungsmittel zwischen 0,1 Mikromol und 100 Millimol pro Liter Lösung liegt.

31. Verfahren nach einem der Ansprüche 11 bis 30, **dadurch gekennzeichnet, daß** die Konzentration der Komponente (B) in dem inerten Lösungsmittel zwischen 0,1 Mikromol und 200 Millimol pro Liter Lösung liegt.

32. Verfahren nach einem der Ansprüche 11 bis 31, **dadurch gekennzeichnet, daß** es unter einer inerten Atmosphäre durchgeführt wird.

33. Verfahren nach einem der Ansprüche 11 bis 32, **dadurch gekennzeichnet, daß** man die Komponenten (A) und (B) in einer Vorstufe in Lösung in ihrem inerten Lösungsmittel über eine Dauer von 30 Sekunden bis 10 Minuten in Kontakt bringt, bevor sie in das Reaktionmedium gegeben werden, wobei diese Vorkontaktstufe unter einer inerten Atmosphäre bei einer Temperatur zwischen 0 und 100°C durchgeführt wird.

34. Verfahren nach Anspruch 33, **dadurch gekennzeichnet, daß** die Vorkontaktstufe bei einer Temperatur zwischen 10 und 70°C durchgeführt wird.

35. Verfahren nach einem der Ansprüche 11 bis 32, **dadurch gekennzeichnet, daß** die Komponenten (A) und (B), die sich in ihrem inerten Lösungsmittel in Lösung befinden, getrennt in das Reaktionsmedium eingebracht werden, wobei dieses bei einer Temperatur von 0 bis 100°C gehalten wird.

36. Verfahren nach Anspruch 35, **dadurch gekennzeichnet, daß** das Reaktionsmedium bei einer Temperatur von 10 bis 70°C gehalten wird.

37. Verfahren nach einem der Ansprüche 11 bis 36, **dadurch gekennzeichnet, daß** man die (Co)polymerisation bei einer Temperatur zwischen 25 und 200°C durchführt.

38. Verfahren nach einem der Ansprüche 11 bis 37, **dadurch gekennzeichnet, daß** man die (Co)polymerisation bei einem absoluten Gesamtdruck von 1 bis 100 bar durchführt.

39. Verfahren nach einem der Ansprüche 11 bis 38, **dadurch gekennzeichnet, daß** man das oder die zu polymerisierende(n) Olefin(e) in flüssiger oder gasförmiger Form unter genügendem Rühren des Polymerisationsmediums einbringt.

40. Verfahren nach einem der Ansprüche 11 bis 39, **dadurch gekennzeichnet, daß** die Olefine ausgewählt sind aus Ethylen, $\alpha$-Olefinen, cyclischen Olefinen und Verbindungen der Formel:

$CH_2 = CH-(CH_2)_n-G-$

worin:

- n eine ganze Zahl von 2 bis 20 darstellt; und
- G einen Rest darstellt, der ausgewählt ist aus:
  -OH; $CHOHCH_2OH$; OT; $-CF_3$; -COOT; -COOH; $-Si(OH)_3$; $-Si(OT)_3$,
  wobei T einen Kohlenwasserstoffrest mit 1 bis 20 Kohlenstoffatomen darstellt.

**41.** Verfahren nach einem der Ansprüche 11 bis 39, **dadurch gekennzeichnet, daß** wenigstens ein Olefin Ethylen ist.

**42.** Verfahren nach einem der Ansprüche 21 bis 41, **dadurch gekennzeichnet, daß** die Polymerisation in Gegenwart eines Emulgiermittels durchgeführt wird, die dann zu einem Latex führt, gegebenenfalls nach einem Filtrationsschritt.

**43.** Verfahren nach Anspruch 42, **dadurch gekennzeichnet, daß** der Latex ein Polyethylen hoher Dichte oder ein Polyethylen mittlerer Dichte oder ein Polyethylen niedriger Dichte ist.

## Claims

**1.** A process for polymerising at least one olefin in a diluent medium in the presence of a bimetallic complex of nickel formed *in situ* from:

(A) at least one ligand represented by the general formula (I) :

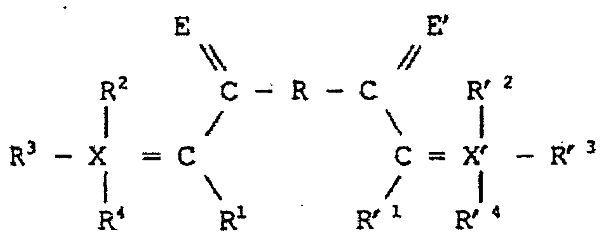

(I)

in which:

- E and E' each independently represent an atom of oxygen or sulfur;
- X and X' each independently represent an atom of phosphorus, arsenic or antimony;
- the radicals $R^1$ and $R'^1$, which may be identical or different, are selected from among:
  - . hydrogen;
  - . linear, branched or cyclic alkyl radicals;
  - . aryl radicals;
  - . arylalkyl radicals;
  - . alkylaryl radicals;
  - . halogens;
  - . the hydroxyl radical;
  - . alkoxide radicals;
  - . 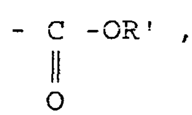

where R' represents a hydrocarbon radical comprising from 1 to 15 carbon atoms;

. $-SO_3Y$, where Y is selected from among Li, Na, $NH_4^+$, $NR_4''^+$ (where R" represents a hydrocarbon radical comprising from 1 to 15 carbon atoms);

- the radicals $R^2$, $R'^2$, $R^3$, $R'^3$, $R^4$ and $R'^4$, which may be identical or different, are selected from among linear, branched or cyclic alkyl radicals, and arylalkyl radicals;
- R is a divalent radical selected from among divalent hydrocarbon radicals comprising from 2 to 38 carbon atoms; and an optionally substituted 1,1'-ferrocenylene radical; and

(B) at least one nickel compound selected from among:

(B1) nickel complexes of oxidation state zero, represented by the general formula (II):

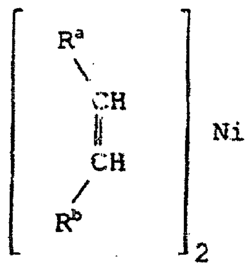

(II)

in which $R^a$ and $R^b$ each independently represent a hydrogen atom, or a linear, branched or cyclic alkyl radical, an aryl, arylalkyl or alkylaryl radical, which may have up to 8 carbon atoms, $R^a$ and $R^b$ possibly also together forming a divalent aliphatic group with 2 to 10 carbon atoms which may have up to three olefinic double bonds as the only carbon-carbon unsaturations;

B2 π-allylnickels represented by the general formula (III) :

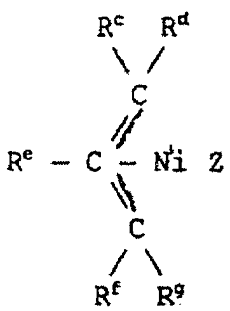

(III)

in which:

- the radicals $R^c$, $R^d$, $R^e$, $R^f$ and $R^g$, which may be identical or different, are selected from among hydrogen and linear, branched or cyclic alkyl radicals, aryl, arylalkyl or alkylaryl radicals having up to 8 carbon atoms;
- the dashed lines represent electron delocalisation on the three contiguous carbon atoms;
- a radical $R^c$ or $R^d$ possibly also forming with a radical $R^e$ or $R^f$ or $R^g$ a divalent alkene group having from 2 to 10 carbon atoms and possibly having up to three olefinic double bonds; and
- Z represents a halogen, an alcohol or an alkanoyloxyl;

(B3) compounds of the bis(allyl)nickel type represented by the general formula (IV) :

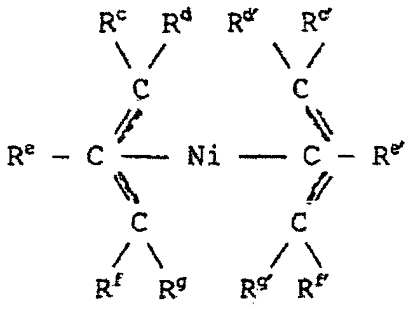 (IV)

in which:

- the radicals $R^e$ to $R^g$, and $R^{e'}$ to $R^{g'}$, which may be identical or different, are selected from among hydrogen and linear, branched or cyclic alkyl radicals, aryl, arylalkyl or alkylaryl radicals having up to 8 carbon atoms;
- the dashed lines represent electron delocalisation on the three contiguous carbon atoms;
- a radical $R^c$ or $R^d$ possibly forming with a radical $R^e$ or $R^f$ or $R^g$ a divalent alkene group having from 2 to 10 carbon atoms and possibly having up to three olefinic double bonds;
- a radical $R^{c'}$ or $R^{d'}$ possibly forming with a radical $R^{e'}$ or $R^{f'}$ or $R^{g'}$ a divalent alkene group having from 2 to 10 carbon atoms and possibly having up to three olefinic double bonds.

2. A process according to claim 1, **characterised in that**, in the formula (I), E and E' are separated by intermediate atoms which are linked to one another by covalent or coordinate bonds.

3. A process according to one of claims 1 and 2, **characterised in that**, in the formula (I), the minimum number of atoms between E and E' is from 3 to 40.

4. A process according to one of claims 1 to 3, **characterised in that** the ligand of the formula (I) comprises one of the following structures:

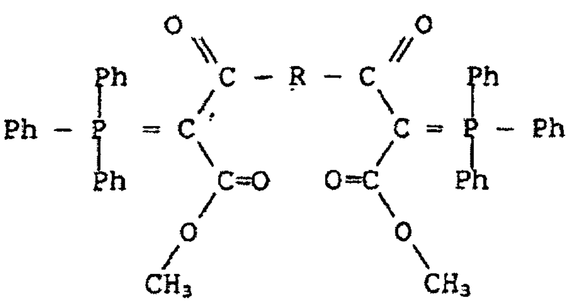 (Ia)

where R represents a 5,6-bicyclo[2.2.1]hept-2-ene radical; - $(CH_2)_4$- or - $(CH_2)_8$-;

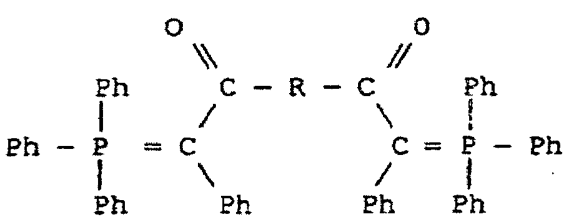 (Ib)

where R represents a 5,6-bicyclo[2.2.1]hept-2-ene radical; or - $(CH_2)_8$-;

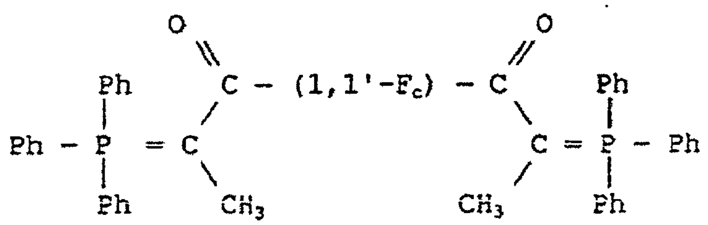

(Ic)

where 1,1'-$F_c$ represents a 1,1'-ferrocenylene radical; and

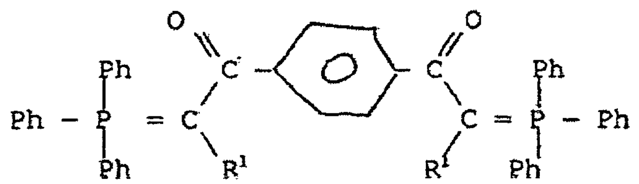

(Id)

where the instances of $R^1$ represent H or Ph or $SO_3Na$ or

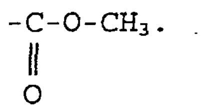

5. A process according to one of claims 1 to 4, **characterised in that** the nickel compound ($B_1$) is selected from among:

- bis(1,5-cyclooctadiene)nickel (0);
- bis(cyclooctatetraene)nickel (0); and
- bis(1,3,7-octatriene)nickel (0).

6. A process according to one of claims 1 to 5, **characterised in that**, in a nickel compound (B2) or (B3), a $\pi$-allyl group has from 3 to 12 carbon atoms having no other aliphatic unsaturations, unless it contains a closed cycle.

7. A process according to one of claims 1 to 6, **characterised in that** the nickel compound (B2) is selected from among:

- $\pi$-allylnickel chloride;
- $\pi$-allylnickel bromide;
- $\pi$-crotylnickel chloride;
- $\pi$-methylallylnickel chloride;
- $\pi$-ethylallylnickel chloride;
- $\pi$-cyclopentylallylnickel bromide;
- $\pi$-cyclooctenylnickel chloride;
- $\pi$-cyclooctadienylnickel chloride;
- $\pi$-cinnamylnickel bromide;
- $\pi$-phenylallylnickel chloride;
- $\pi$-cyclohexenylnickel bromide;
- $\pi$-cyclododecenylnickel chloride;
- $\pi$-cyclododecatrienylnickel chloride;
- $\pi$-allylnickel acetate;
- $\pi$-methylallylnickel propionate;

- π-cyclooctenylnickel octoate;
- π-cyclooctenylnickel methoxylate; and
- π-allylnickel ethoxylate.

**8.** A process according to one of claims 1 to 7,
**characterised in that** the nickel compound (B3) is selected from among:

- bis-π-(allyl)nickel;
- bis-π-(methallyl)nickel;
- bis-π-(cinnamyl)nickel;
- bis-π-(octadienyl)nickel;
- bis-π-(cyclohexenyl)nickel;
- (π-allyl-π-methallyl)nickel; and
- bis-π-(cyclooctatrienyl)nickel.

**9.** A process according to one of claims 1 to 8, **characterised in that** components (A) and (B) are introduced in quantities such that the molar ratio of nickel to ligand(s) is between 1 and 100.

**10.** A process according to claim 9, **characterised in that** components (A) and (B) are introduced in quantities such that the molar ratio of nickel to ligand(s) is between 2 and 50.

**11.** A process according to one of claims 1 to 10, **characterised in that**:

- in a first step, each of the constituents (A) and (B), in solution in an inert solvent, are separately or simultaneously introduced into a reactor together with the reaction medium; and
- in a second step, the olefin or olefins is/are introduced, (co)polymerisation proceeding at a temperature of between 0 and 300°C and at a total absolute pressure of from 1 to 200 bar.

**12.** A process according to claim 11, **characterised in that** the inert solvent for constituents (A) and (B) is selected from among saturated aliphatic hydrocarbons, saturated alicyclic hydrocarbons, aromatic hydrocarbons and mixtures thereof.

**13.** A process according to claims 11 and 12, **characterised in that** the reaction medium consists of an organic medium.

**14.** A process according to one of claims 11 and 12, **characterised in that** the reaction medium comprises a continuous liquid aqueous phase, which comprises more than 30% by weight of water.

**15.** A process according to claim 14, **characterised in that** the aqueous phase is the only liquid phase.

**16.** A process according to claim 14, **characterised in that** the medium comprises a liquid organic phase.

**17.** A process according to one of claims 13 to 16, **characterised in that** the organic medium or phase is selected from among:

- saturated aliphatic hydrocarbons, saturated alicyclic hydrocarbons, aromatic hydrocarbons and mixtures thereof; and
- insofar as the polymerisation conditions maintain them in liquid form, α-olefins, unconjugated dienes and mixtures thereof.

**18.** A process according to one of claims 14 to 17, **characterised in that** the polymerisation medium comprises a dispersant.

**19.** A process according to claim 18, **characterised in that** the dispersant is present in an amount of up to 10% by weight relative to the weight of water.

**20.** A process according to claim 19, **characterised in that** the dispersant is present in an amount of 0.01 to 5% by weight relative to the weight of water.

**21.** A process according to one of claims 14 to 20, **characterised in that** the polymerisation medium comprises an emulsifier.

**22.** A process according to claim 21, **characterised in that** the emulsifier is present in an amount of up to 10% by weight relative to the weight of water.

**23.** A process according to claim 22, **characterised in that** the emulsifier is present in an amount of 0.01 to 5% by weight relative to the weight of water.

**24.** A process according to one of claims 21 to 23, **characterised in that** the emulsifier is present in a quantity greater than the critical micelle concentration.

**25.** A process according to claim 24, **characterised in that** the emulsifier is present in a sufficient quantity for the polymerisation to proceed essentially in the micelles.

**26.** A process according to one of claims 21 to 25, **characterised in that** the polymerisation medium comprises a liquid organic phase and a co-surfactant.

**27.** A process according to claim 26, **characterised in that** the co-surfactant exhibits solubility in water of less than $1 \times 10^{-3}$ mol per litre at 20°C.

**28.** A process according to one of claims 26 and 27, **characterised in that** the co-surfactant is present in an amount of up to 10% by weight relative to the weight of water.

**29.** A process according to one of claims 26 to 28, **characterised in that** the ratio of the mass of emulsifier to that of co-surfactant ranges from 0.5 to 2.

**30.** A process according to one of claims 11 to 29, **characterised in that** the concentration of constituent (A) in the inert solvent is between 0.1 µmol and 100 mmol per litre of solution.

**31.** A process according to one of claims 11 to 30, **characterised in that** the concentration of constituent (B) in the inert solvent is between 0.1 µmol and 200 mmol per litre of solution.

**32.** A process according to one of claims 11 to 31, **characterised in that** it is performed under an inert atmosphere.

**33.** A process according to one of claims 11 to 32, **characterised in that**, in a preliminary step, constituents (A) and (B) are brought into contact in solution in their inert solvent for a period of 30 seconds to 10 minutes, before they are introduced into the reaction medium, this precontacting step being performed under an inert atmosphere at a temperature of between 0 and 100°C.

**34.** A process according to claim 33, **characterised in that** this precontacting step is performed at a temperature of between 10 and 70°C.

**35.** A process according to one of claims 11 to 32, **characterised in that** constituents (A) and (B), which are in solution in their inert solvent, are introduced separately into the reaction medium, the latter being maintained at a temperature of 0 to 100°C.

**36.** A process according to claim 35, **characterised in that** the reaction medium is maintained at a temperature of 10 to 70°C.

**37.** A process according to one of claims 11 to 36, **characterised in that** (co)polymerisation is carried out at a temperature of between 25 and 200°C.

**38.** A process according to one of claims 11 to 37, **characterised in that** (co)polymerisation is carried out at a total absolute pressure of 1 to 100 bar.

**39.** A process according to one of claims 11 to 38, **characterised in that** the olefin or olefins to be polymerised, in liquid or gaseous form, is/are introduced with sufficient stirring of the polymerisation medium.

**40.** A process according to one of claims 11 to 39, **characterised in that** the olefins are selected from among ethylene, α-olefins, cyclic olefins and compounds of the formula :

$$CH_2 = CH\text{-} (CH_2)_n\text{-}G\text{-}$$

in which:

- n represents an integer from 2 to 20; and
- G represents a radical selected from among:
  -OH; $CHOHCH_2OH$ ; OT; $-CF_3$; -COOT; -COOH; $-Si(OH)_3$; $-Si(OT)_3$,
  T representing a hydrocarbon radical comprising from 1 to 20 carbon atoms.

**41.** A process according to one of claims 11 to 39, **characterised in that** at least one olefin is ethylene.

**42.** A process according to one of claims 21 to 41, **characterised in that** polymerisation is performed in the presence of an emulsifier, so giving rise to a latex, if necessary after a filtration step.

**43.** A process according to claim 42, **characterised in that** the latex is a high density polyethylene or a medium density polyethylene or a low density polyethylene.